# EUROPÄISCHE PATENTSCHRIFT

(11) **EP 2 497 624 B1**
(45) Veröffentlichungstag und Bekanntmachung des Hinweises auf die Patenterteilung: **01.03.2023**
(21) Anmeldenummer: 12152571.1
(22) Anmeldetag: 26.01.2012
(51) Int. Cl.: B29C 70/76, B29C 70/08, B29C 43/02, B29C 70/86, B29C 70/46, B29C 70/22, B29C 70/12, B29C 43/00

(54) **Faserhalbzeug mit einem Kernbereich und Verfahren zur Herstellung eines faserverstärkten Kunststoffbauteils**
Semi-finished fibre product with a core and device for producing a fibre-reinforced plastic component
Demi-produit en fibre comprenant une âme et procédé de fabrication d'un composant en matière synthétique renforcé par des fibres

(30) Priorität: 08.03.2011 DE 102011005219
(43) Veröffentlichungstag der Anmeldung: 12.09.2012
(73) Patentinhaber: Bayerische Motoren Werke Aktiengesellschaft, 80809 München (DE)
(72) Erfinder: Ulrich, Josef, 86570 Inchenhofen (DE)

(56) Entgegenhaltungen:
- DE-A1- 10 058 431
- JP-A- H09 277 420
- US-A- 4 305 903
- US-A1- 2009 146 463

## Beschreibung

Die vorliegende Erfindung betrifft ein Faserhalbzeug gemäß Anspruch 1 sowie ein Verfahren gemäß Anspruch 3 zum Herstellen eines Kunststoffbauteils ausgehend von einem Faserhalbzeug.

Faserverstärkte Kunststoffbauteile werden u.a. im sogenannten Nasspress-Verfahren hergestellt. Bei diesem Verfahren werden vorimprägnierte Fasermatten in ein formgebendes Werkzeug eingelegt und durch mechanischen Druck oder durch Beaufschlagung mit Temperatur zum fertigen Bauteil geformt. Dabei härtet die Imprägnierung, die im Allgemeinen aus Harz besteht, aus. Zur Fertigung von maßgenauen Bauteilen werden die Umformwerkzeuge mit Quetschkanten versehen, die dann die Beschnittkontur des Bauteils erzeugen. Alternativ hierzu ist es auch bekannt, die Bauteile mit einem freien Materialauslauf zu versehen. In beiden Verfahren wird in einem anschließenden Bearbeitungsschritt die finale Außenkontur erzeugt, indem Randbereiche des Bauteils beschnitten werden, indem sie beispielsweise mit Hilfe eines Fräsvorgangs abgetragen werden. Dieser Nachbearbeitungsschritt stellt nicht nur eine Verlängerung des Gesamtprozesses dar, sondern führt auch zu einer Erhöhung der Herstellungskosten. Darüber hinaus steht der erzeugte Abfall an überschüssigem Fasermaterial dem Grundgedanken einer nachhaltigen Fertigung entgegen, denn diese Bauteilreste müssen anschließend aufwändig recycelt werden.

Die US 4,305,903 A betrifft ein faserverstärktes Verbundkunststoffelement und ein Verfahren zu dessen Herstellung, um ein hochfestes Leichtbauteil bereitzustellen, das besonders zur Verwendung als Strukturbauteil geeignet ist.

Die DE 100 58 431 A1 beschreibt ein Verfahren zum Formen und dadurch hergestellte stoßbeständige Autoteile.

Aus der JPH09277420A ist ein faserverstärktes Kunststoffbauteil und ein Verfahren zu dessen Herstellung, insbesondere als Tragstruktur für elektronische Bauteile eines Computers, bekannt.

Ausgehend von diesem Stand der Technik macht es sich die vorliegende Erfindung zur Aufgabe, ein vereinfachtes Verfahren anzugeben, mit dem die Nachteile des Standes der Technik überwunden werden. Ferner ist es Aufgabe der Erfindung, ein Faserhalbzeug anzugeben, mit dem faserverstärkte Kunststoffe herstellbar sind, deren Rand- bzw. Konturbereiche nicht oder nur unwesentlich nachbearbeitet werden müssen.

Zur Lösung dieser Aufgabe schlägt die Erfindung ein Faserhalbzeug gemäß Anspruch 1.

Weiterhin kann das Faserhalbzeug einen Fasergehalt im Bereich von 35 Gew.-% bis 70 Gew.-%, bevorzugt im Bereich von 40 Gew.-% bis 55 Gew.-% und besonders bevorzugt im Bereich von 45 Gew.-% bis 55 Gew.-% bezogen auf das Gewicht des gesamten Faserhalbzeugs aufweisen.

In einem weiteren Aspekt betrifft die Erfindung ein Verfahren gemäß Anspruch 3 zur Herstellung eines faserverstärkten Kunststoffbauteils mit den Schritten Bereitstellen eines Faserhalbzeugs, wie oben beschrieben, Pressen des Faserhalbzeugs mittels eines Presswerkzeugs, wobei die Matrix des Kernbereichs und die Matrix des Randbereichs aushärten und/oder erstarren und Entnehmen des fertigen Bauteils aus dem Presswerkzeug. Die Matrix des Kernbereichs sowie die Matrix des Randbereichs kann dabei jeweils aus thermoplastischem Material bestehen, das beim Beaufschlagen mit Druck und/oder Wärmeenergie aushärtet oder aus einem duroplastischen Kunststoffmaterial bestehen, das beim Beaufschlagen mit Druck und/oder Wärmeenergie erstarrt. Auch eine Kombination einer thermoplastischen Matrix und einer duroplastischen Matrix ist von dem Erfindungsgedanken umfasst.

Erfindungsgemäß wird zum Bereitstellen des Faserhalbzeugs zuerst die Faserstruktur mit der Matrix imprägniert und anschließend in einem Umfangsabschnitt der imprägnierten Faserstruktur der Randbereich aufgebracht werden.

Darüber hinaus kann das Aufbringen des Randbereichs auf den Kernbereich in einer Werkzeughälfte eines Presswerkzeuges erfolgen. Mit anderen Worten: Zuerst wird der Kernbereich in eine Matrize eines Presswerkzeuges randkonturnah eingelegt und anschließend der Randbereich um den Kernbereich herum aufgebracht. Der Randbereich verschließt dabei materialfrei Bereiche zwischen der äußeren Kontur des Kernbereichs und einer inneren Kontur der Matrize des Presswerkzeugs. Randkonturnah im Sinne der Erfindung ist so zu verstehen, dass der Kernbereich derart gefertigt oder in

Form gebracht wird, dass seine äußere geometrische Form im Wesentlichen der inneren Form der Kavität des Presswerkzeuges entspricht.

Für den Kernbereich kann eine sogenannte

Nasspressmatte oder eine Vielzahl übereinander angeordneter Nasspressmatten verwendet werden. Diese Nasspressmatten weisen eine Faserstruktur auf, die mit einem Matrixwerkstoff imprägniert sind. Als Matrixwerkstoff kommen hierbei die o.g. Kunststoffe oder ein Harz zur Anwendung.

In einer alternativen Ausführungsform des Verfahrens wird zum Bereitstellen des Faserhalbzeugs der Kernbereich und der Randbereich vorkonfektioniert und anschließend das so erstellte Faserhalbzeug in das Presswerkzeug eingebracht.

Weiterhin kann die Matrix des Kernbereichs und die Matrix des Randbereichs beim Pressen des Faserhalbzeugs gleichzeitig aushärten und/oder erstarren.

Erfindungsgemäß können mit Hilfe von Werkzeugen mit Tauchkanten Bauteile in einem kombinierten Nasspress- und SMC-Verfahren hergestellt werden. Das erfindungsgemäße Verfahren bietet den Vorteil, dass durch Vorsehen eines Randbereiches aus SMC- oder BMC-Material beim Schließvorgang des Presswerkzeugs das fließfähige Material des Randbereichs die Außenkontur maßgetreu abbildet. Somit muss das fertige Bauteil kaum nachbearbeitet werden, um es auf Endmaß zu bringen. Selbst wenn eine Nachbearbeitung notwendig ist, kann diese mit geringem Aufwand realisiert werden, da die Randbereiche im Verhältnis zum Kernbereich nachgiebig bzw. weicher sind und nur einen leichten Grat aufweisen.

Im Folgenden wird die Erfindung anhand der Figurenbeschreibung näher erläutert. Die Ansprüche, die Figuren und die Beschreibung enthalten eine Vielzahl von Merkmalen, die im Folgenden im Zusammenhang mit beispielhaft beschriebenen Ausführungsformen der vorliegenden Erfindung erläutert werden. Der Fachmann wird diese Merkmale auch einzeln und in anderen Kombinationen betrachten, um weitere Ausführungsformen zu bilden, die an entsprechende Anwendungen der Erfindung angepasst sind, ohne vom Anwendungsbereich der Ansprüche abzuweichen. Sämtliche Bereichsangaben der Erfindung umfassen auch deren Randwerte.

Es zeigen in schematischer Darstellung
- Figur1: eine schematische Ansicht eines erfindungsgemäßen Faserhalbzeugs,
- Figur 2: eine Schnittansicht durch ein erfindungsgemäßes Faserhalbzeug während eines Pressschrittes.

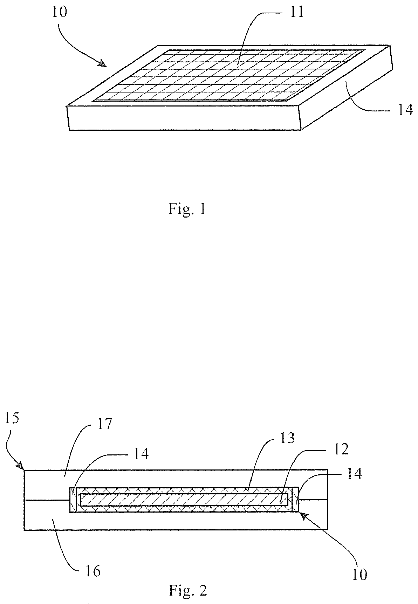

im Folgenden soll zunächst mit Bezug zu Figur 1 der grundlegende Aufbau eines Faserhalbzeugs 10 gemäß der vorliegenden Erfindung erläutert werden. Ein solches Faserhalbzeug 10 weist einen Kernbereich 11 und einen Randbereich 14 auf. In Figur 1 umgibt der Randbereich 14 die äußere Kontur des Kernbereichs 11 vollständig.

Der Kernbereich 11 ist als eine sogenannte Nasspressmatte bzw. Prepreg ausgebildet, welche eine Faserstruktur 12 aufweist, die von einer Matrix 13 umgeben ist. Zur besseren Darstellung ist eine Schnittansicht in Figur 2 abgebildet. Der stirnseitige Rand des Kernbereichs 11 ist umgeben von dem Randbereich 14, der als Sheet Moulding Compound und/oder als Bulk Moulding Compound ausgebildet ist. Grundsätzlich unterscheiden sich der Kernbereich 11 und der Randbereich 14 durch die Länge ihrer Faserverstärkung. Während im Kernbereich überwiegend Endlosfasern als Verstärkung dienen, sind im Randbereich Kurzfasern als Verstärkung vorgesehen. Im Sinne der Erfindung weisen Kurzfasern eine Länge im Bereich von 1 bis 30 mm und Langfasern bzw. Endlosfasern eine Länge im Bereich von 25 bis 30 mm auf.

In Figur 2 ist der Pressschritt bei der Herstellung eines faserverstärkten Kunststoffbauteils ausgehend von einem Faserhalbzeug 10 dargestellt. Das Faserhalbzeug 10 wird dabei in ein Presswerkzeug 15 eingebracht, das eine obere Werkzeughälfte 17 und eine untere Werkzeughälfte 16 aufweist.

Hierbei wird zuerst der Kernbereich 11, der aus einer oder mehreren übereinander liegenden Nasspressmatten besteht, in der Matrize des Werkzeugs 16 positioniert. Anschließend wird der Randbereich aus BMC oder SMC um den stirnseitigen Rand der Nasspressmatte herum aufgebracht, beispielsweise durch Spritzen.

Beide Werkzeughälften haben jeweils eine Vertiefung bzw. Matrize, wobei durch in Kontakt bringen der Werkzeughälften 16, 17 die Vertiefungen zusammen eine Kavität ausbilden, in der sich das Faserhalbzeug 10 befindet. Dem Fachmann sind solche Werkzeuge als Umform und/oder Presswerkzeuge bekannt, so dass auf deren Aufbau und Funktionsweise hier nicht näher eingegangen wird.

Durch Zusammenfahren der Werkzeughälften 16 und 17 wird das Faserhalbzeug 10 in eine vorbestimmte äußere Form überführt. Anschließend wird Druck und/oder Wärmeenergie auf das Faserhalbzeug 10 ausgeübt, so dass das Matrix-Material des Kernbereichs 11 und das Matrix-Material des Randbereichs 14 im Wesentlichen gleichzeitig erstarrt oder aushärtet. Dadurch wird das fertige Bauteil in einem Hub gebildet.

In einer alternativen Ausführungsform der Erfindung wird das Faserhalbzeug 10 nicht in der Matrize der Werkzeughälfte 16 zusammengesetzt sonder extern vorkonfektioniert. D.h. außerhalb des Werkzeugs 16 wird an dem Kernbereich 11 ein Randbereich 14 angeordnet, so dass die zwei Bereiche haftend miteinander verbunden sind. Diese Bauteilanordnung wird dann in die Matrize der Werkzeughälfte 16 eingelegt und gemäß dem oben beschrieben Pressschritt zum fertigen Bauteil gepresst.

Abschließend kann der Randbereich 14 insbesondere durch Laser- oder Wasserstrahlschneiden nachbearbeitet werden, um das faserverstärkte Bauteil auf sein finales äußeres Abmaß zu bringen.

## Patentansprüche

1. Faserhalbzeug (10) mit
- einem Kernbereich (11), der als eine Nasspressmatte ausgebildet ist, welche eine Faserstruktur (12) aufweist, die mit einer Matrix (13) imprägniert ist, wobei die Faserstruktur (12) ein Gewebe, Geflecht, Gelege und/oder Vlies aus Kohlenstofffaser umfasst, und
- einem Randbereich (14), der den stirnseitigen Randbereich des Kernbereichs (11) vollständig umgibt, wobei der Randbereich (14) ein Faser-Matrix-Halbzeug umfasst, wobei das Faser-Matrix-Halbzeug ein Sheet Moulding Compound (SMC), ein Bulk Moulding Compound (BMC) und/oder ein Thick Moulding Compound (TMC) umfasst, wobei
der Randbereich (14) in Form einer Ummantelung ausgebildet ist, und
wobei im Kernbereich (11) überwiegend Endlosfasern mit einer Länge im Bereich von 25 bis 30 mm als Verstärkung dienen und im Randbereich (14) Kurzfasern mit einer Länge im Bereich von 1 bis 30 mm als Verstärkung vorgesehen sind.

2. Faserhalbzeug (10) nach Anspruch 1, **gekennzeichnet durch** einen Fasergehalt
im Bereich von 35 Gew.-% bis 70 Gew.-%,
bevorzugt im Bereich von 40 Gew.-% bis 55 Gew.-% und
besonders bevorzugt im Bereich von 45 Gew.-% bis 55 Gew.-%, bezogen auf das Gewicht des gesamten Faserhalbzeugs (10), aufweist.

3. Verfahren zur Herstellung eines faserverstärkten Kunststoffbauteils mit den Schritten:
- Bereitstellen eines Faserhalbzeugs (10) nach einem der Ansprüche 1 oder 2,
- Pressen des Faserhalbzeugs (10) mittels eines Presswerkzeugs (15), wobei die Matrix des Kernbereichs (11) und die Matrix des Randbereichs (14) aushärten und/oder erstarren und
- Entnehmen des fertigen Bauteils aus dem Presswerkzeug (15), wobei zum Bereitstellen des Faserhalbzeugs (10)
- die Faserstruktur (12) mit der Matrix (13) imprägniert wird und
- in einem Umfangsabschnitt der imprägnierten Faserstruktur (12) der Randbereich (14) aufgebracht wird wobei der stirnseitige Rand des Kernbereichs (11) von dem Randbereich (14) vollständig umgeben ist und der Randbereich (14) in Form einer Ummantelung ausgebildet ist.

4. Verfahren nach Anspruch 3, **dadurch gekennzeichnet, dass**
- das Aufbringen des Randbereichs (14) auf den Kernbereich (11) gemäß Anspruch 3 in einer Werkzeughälfte (16) eines Presswerkzeugs (15) erfolgt.

5. Verfahren nach einem der Ansprüche 3 oder 4, **dadurch gekennzeichnet, dass**
- zum Bereitstellen des Faserhalbzeugs (10) der Kernbereich (11) und der Randbereich (14) vorkonfektioniert werden und anschließend das Faserhalbzeug (10) in das Presswerkzeug (15) eingebracht wird.

6. Verfahren nach einem der vorhergehenden Ansprüche 3 bis 5, **dadurch gekennzeichnet, dass**
die Matrix (13) des Kernbereichs (11) und die Matrix des Randbereichs (14) beim Pressen des Faserhalbzeugs (10) gleichzeitig aushärten und/oder erstarren.

## Claims

1. Semifinished fibre product (10) having
- a core region (11) in the form of a wet compression mat having a fibre structure (12) which is impregnated with a matrix (13), wherein the fibre structure (12) comprises a woven fabric, a braid, a laid scrim and/or a nonwoven composed of carbon fibre, and
- a peripheral region (14) which completely surrounds the end-face peripheral region of the core region (11), wherein the peripheral region (14) comprises a semifinished fibre-matrix product, wherein the semifinished fibre-matrix product comprises a sheet moulding compound (SMC), a bulk moulding compound (BMC) and/or a thick moulding compound (TMC), wherein the peripheral region (14) is in the form of an encapsulation, and wherein, in the core region (11), continuous fibres having a length in the range of 25 to 30 mm predominantly serve as reinforcement, and, in the peripheral region (14), short fibres having a length in the range of 1 to 30 mm are provided as reinforcement.

2. Semifinished fibre product (10) according to Claim 1, **characterized by**
has a fibre content
in the range of 35% by weight to 70% by weight, preferably in the range of 40% by weight to 55% by weight, and
particularly preferably in the range of 45% by weight to 55% by weight,
based on the weight of the overall semifinished fibre product (10).

3. Method for producing a fibre-reinforced plastics component, comprising the steps:
- providing a semifinished fibre product (10) according to either of Claims 1 and 2,
- pressing the semifinished fibre product (10) by means of a pressing tool (15), wherein the matrix of the core region (11) and the matrix of the peripheral region (14) cure and/or solidify, and
- removing the finished component from the pressing tool (15),
wherein, in order to provide the semifinished fibre product (10),
- the fibre structure (12) is impregnated with the matrix (13) and
- the peripheral region (14) is applied in a peripheral portion of the impregnated fibre structure (12), wherein the end-face periphery of the core region (11) is completely surrounded by the peripheral region (14) and the peripheral region (14) is in the form of an encapsulation.

4. Method according to Claim 3, **characterized in that**
- the application of the peripheral region (14) to the core region (11) according to Claim 3 is effected in a tool half (16) of a pressing tool (15) .

5. Method according to either of Claims 3 and 4, **characterized in that**
- the core region (11) and the peripheral region (14) are pre-assembled in order to provide the semifinished fibre product (10), and the semifinished fibre product (10) is subsequently introduced into the pressing tool (15).

6. Method according to one of the preceding Claims 3 to 5, **characterized in that**
the matrix (13) of the core region (11) and the matrix of the peripheral region (14) cure and/or solidify at the same time during the pressing of the semifinished fibre product (10).

## Revendications

1. Produit semi-fini fibreux (10) comprenant
- une zone de noyau (11) qui est réalisée sous la forme d'un mat pressé humide qui présente une structure fibreuse (12) qui est imprégnée d'une matrice (13), la structure fibreuse (12) comprenant un tissu, un tressage, une nappe et/ou un non-tissé en fibres de carbone, et
- une zone de bord (14), qui entoure complètement la zone de bord frontale de la zone de noyau (11), la zone de bord (14) comprenant un produit semi-fini fibres-matrice, le produit semi-fini fibres-matrice comprenant un composé de moulage en feuille (SMC), un composé de moulage en vrac (BMC) et/ou un composé de moulage épais (TMC),
la zone de bord (14) étant réalisée sous la forme d'un enrobage, et
dans la zone de noyau (11), principalement des fibres continues d'une longueur dans la plage allant de 25 à 30 mm servant de renfort et, dans la zone de bord (14), des fibres courtes d'une longueur dans la plage allant de 1 à 30 mm étant prévues en tant que renfort.

2. Produit semi-fini fibreux (10) selon la revendication 1, **caractérisé par** présente une teneur en fibres dans la plage allant de 35 % en poids à 70 % en poids, de préférence dans la plage allant de 40 % en poids à 55 % en poids et de manière particulièrement préférée dans la plage allant de 45 % en poids à 55 % en poids, par rapport au poids de l'ensemble du produit semi-fini fibreux (10).

3. Procédé de fabrication d'un composant en matière plastique renforcé par des fibres, comprenant les étapes suivantes :
- la fourniture d'un produit semi-fini fibreux (10) selon l'une quelconque des revendications 1 ou 2,
- le pressage du produit semi-fini fibreux (10) au moyen d'un outil de pressage (15), la matrice de la zone de noyau (11) et la matrice de la zone de bord (14) durcissant et/ou se solidifiant et
- le retrait du composant fini de l'outil de pressage (15),
pour la fourniture du produit semi-fini fibreux (10),
- la structure fibreuse (12) étant imprégnée de la matrice (13) et
- la zone de bord (14) étant appliquée dans une section périphérique de la structure fibreuse imprégnée (12), le bord frontal de la zone de noyau (11) étant entièrement entouré par la zone de bord (14) et la zone de bord (14) étant réalisée sous la forme d'un enrobage.

4. Procédé selon la revendication 3, **caractérisé en ce que**
- l'application de la zone de bord (14) sur la zone de noyau (11) s'effectue selon la revendication 3 dans une moitié d'outil (16) d'un outil de pressage (15).

5. Procédé selon l'une quelconque des revendications 3 ou 4, **caractérisé en ce que**
- pour la fourniture du produit semi-fini fibreux (10), la zone de noyau (11) et la zone de bord (14) sont pré-confectionnées et ensuite le produit semi-fini fibreux (10) est introduit dans l'outil de pressage (15).

6. Procédé selon l'une quelconque des revendications 3 à 5précédentes, **caractérisé en ce que** la matrice (13) de la zone de noyau (11) et la matrice de la zone de bord (14) durcissent et/ou se solidifient simultanément lors du pressage du produit semi-fini fibreux (10).
